# EUROPÄISCHE PATENTSCHRIFT

(11) **EP 2 634 318 B1**
(45) Veröffentlichungstag und Bekanntmachung des Hinweises auf die Patenterteilung: **27.08.2014**
(21) Anmeldenummer: 13156547.5
(22) Anmeldetag: 25.02.2013
(51) Int. Cl.: E03C 1/04

(54) **Sanitärarmatur**
Sanitary fittings
Armature sanitaire

(30) Priorität: 28.02.2012 DE 102012203018
(43) Veröffentlichungstag der Anmeldung: 04.09.2013
(73) Patentinhaber: Hansgrohe SE, 77761 Schiltach (DE)
(72) Erfinder: Blattner, Joachim, 77716 Haslach (DE); Grohe, Philippe, 77709 Wolfach (DE); Schweickerdt, Stefanie, 72160 Horb (DE)
(74) Vertreter: Patentanwälte Ruff, Wilhelm, Beier, Dauster & Partner

(56) Entgegenhaltungen:
- WO-A1-2008/136959
- US-A1- 2011 100 494

## Beschreibung

Die Erfindung geht aus von einer Sanitärarmatur. Sanitärarmaturen, wie sie an Badewannen, Duschwannen oder Waschbecken verwendet werden, haben üblicherweise zwei Betätigungselemente und einen Auslauf. Die Befestigung der Sanitärarmatur kann an dem Waschbecken selbst erfolgen, aber auch an der Wand, und zwar sowohl an der Rückwand als auch beispielsweise an einer Seitenwand innerhalb einer Nische.

In vielen Fällen sind die Bedienelemente rechts und links angeordnet, während der Auslauf in der Mitte aus der Sanitärarmatur heraus führt.

Der Erfindung liegt die Aufgabe zu Grunde, eine schlanke platzsparende und ohne Vorsprünge auskommende Sanitärarmatur zu schaffen.

Zur Lösung dieser Aufgabe schlägt die Erfindung eine Sanitärarmatur mit den Merkmalen des Anspruchs 1 vor. Weiterbildungen der Erfindung sind Gegenstand von Unteransprüchen.

Der rohrförmige Auslaufkörper verwendet eine sehr einfache Grundform, die ohne Vorsprünge auskommt. An dem einen Ende des Auslaufkörpers ist stirnseitig der Auslauf angeordnet, so dass der Auslaufkörper anstelle der im Stand der Technik üblichen horizontalen Anordnung eine Anordnung in einer vertikalen Ebene aufweist. Die in dem Auslaufkörper angeordneten Ventileinrichtungen werden durch jeweils ein Betätigungselement betätigt. Eines dieser Betätigungselemente ist am Auslaufende angeordnet, das andere dem dem Auslaufende entgegengesetzten Ende des Auslaufkörpers.

Der Befestigungsansatz, der ebenfalls rohrförmig ist, dient dazu, den Auslaufkörper zu befestigen, entweder an der Wand, also einer senkrechten Fläche, oder an dem Waschbecken oder Waschtisch selbst, also auf einer horizontalen Fläche. Durch den Befestigungsansatz führen auch die Zuleitungen zu der ersten Ventileinrichtung in dem Armaturenkörper.

Bei der Ausbildung der Sanitärarmatur für ein Waschbecken kann erfindungsgemäß in Weiterbildung vorgesehen sein, dass der Befestigungsansatz als Standrohr ausgebildet ist. Falls er für eine exakt vertikale Anordnung vorgesehen ist, verläuft also seine freie Stirnseite, also das Befestigungsende, senkrecht zur Achse des Standrohrs. Natürlich kann auch das Standrohr leicht schräg angeordnet sein. Die eigentliche Befestigung kann auf eine der üblichen bekannten Befestigungsarten geschehen.

Erfindungsgemäß kann vorgesehen sein, dass das Befestigungsende an dem dem Betätigungsende des Auslaufkörpers entgegengesetzten Ende des Befestigungsansatzes ausgebildet ist. Diese Art der Ausbildung eignet sich insbesondere für die Anordnung als auf einem Waschtisch angebrachte Sanitärarmatur.

Es ist aber ebenfalls möglich, falls die Sanitärarmatur an der Rückwand angebracht werden soll, dass das Befestigungsende an dem dem Auslaufende des Auslaufkörpers entgegengesetzten Ende des Befestigungsansatzes ausgebildet ist. Hierbei verläuft der Befestigungsansatz im Wesentlichen horizontal.

Es ist aber ebenfalls möglich und wird von der Erfindung vorgeschlagen, falls die Sanitärarmatur an der Rückwand angebracht werden soll, dass auch dort der Befestigungsansatz schräg verläuft, insbesondere schräg von unten nach oben.

Insbesondere kann in Weiterbildung vorgesehen sein, dass der Befestigungsansatz und der Auslaufkörper einen spitzen Winkel miteinander einschließen. Dies macht es möglich, dass die Zuleitungen beispielsweise nur eine geringe Krümmung an der Ansatzstelle des Befestigungsansatzes aufzuweisen brauchen.

Erfindungsgemäß kann in Weiterbildung vorgesehen sein, dass der Auslaufkörper, der ja rohrförmig ist, geradlinig ausgebildet ist, also eine gerade Mittelachse aufweist.

Es kann ebenfalls vorgesehen sein, dass der Befestigungsansatz geradlinig ausgebildet ist.

Es ist aber ebenfalls möglich und wird von der Erfindung vorgeschlagen, dass der Auslaufkörper eine leichte Krümmung aufweist, so dass die jeweiligen Enden des rohrförmigen Auslaufkörpers nicht in gegenseitiger axialer Ausrichtung angeordnet sind.

Auch der Befestigungsansatz kann mit einer leichten Krümmung versehen sein.

Die Krümmung kann sowohl eine konkave als auch eine konvexe Krümmung sein.

Die gekrümmte Ausbildung des Auslaufkörpers kann sowohl mit einer ebenfalls gekrümmten Ausbildung als auch mit einer geradlinigen Ausbildung des Befestigungsansatzes kombiniert werden.

Auch die geradlinige Ausbildung des Auslaufkörpers kann mit einer geradlinigen als auch mit einer gekrümmten Ausbildung des Auslaufkörpers kombiniert werden.

Erfindungsgemäß kann in Weiterbildung vorgesehen sein, dass eine Längsachse des Befestigungsendes des Befestigungsansatzes von einer Längsachse des gegenüberliegenden Endes des Auslaufkörpers um maximal 45°, vorzugsweise bis 15° abweicht.

Es kann ebenfalls in Weiterbildung vorgesehen sein, dass eine Längsachse des Auslaufendes des Auslaufkörpers von einer Längsachse des Betätigungsendes des Auslaufkörpers um maximal 45°, vorzugsweise bis 15° abweicht.

In Weiterbildung der Erfindung kann vorgesehen sein, dass das Betätigungselement an dem Betätigungsende des Auslaufkörpers eine verdrehbare Kappe aufweist, deren Außenseite als angenähert zylindrische Fortsetzung des Auslaufkörpers geformt ist. Dies trägt mit zur schlanken Form der Sanitärarmatur bei. Insbesondere kann dabei vorgesehen sein, dass die Kappe eine quer zur Längsachse des Auslaufkörpers verlaufende ebene Endfläche aufweist.

In nochmaliger Weiterbildung der Erfindung kann vorgesehen sein, dass das Betätigungselement an dem Auslaufende des Auslaufkörpers als verdrehbare Hülse ausgebildet ist, deren Außenseite vorzugsweise als angenähert zylindrische Fortsetzung des Auslaufkörpers geformt ist.

Insbesondere kann vorgesehen sein, dass die Hülse des Betätigungselements den Auslauf aus der Sanitärarmatur umgibt, wobei beispielsweise die Stirnfläche der Hülse so ausgebildet ist, dass der Auslauf vertieft innerhalb der Hülse angeordnet ist.

Erfindungsgemäß kann vorgesehen sein, dass die durch das Betätigungselement am Betätigungsende betätigte Ventileinrichtung der Sanitärarmatur ein Mischventil ist, das die Temperatur des zu dem Auslauf fließenden Wassers bestimmt. Dann führt von diesem Mischventil nur noch eine Leitung zu dem Auslauf. Die von dem Betätigungselement am Auslaufende betätigte Ventileinrichtung kann in Weiterbildung als Mengenregulierventil ausgebildet sein, wobei sie gegebenenfalls noch weitere Funktionen umfassen kann.

Es ist aber ebenfalls möglich und liegt im Rahmen der Erfindung, dass die Ventileinrichtung am Betätigungsende des Auslaufkörpers als ein Mengenregulierventil ausgebildet ist, das sowohl für das kalte als auch für das warme Wasser zuständig ist und die Menge beider Wasserströmungen reguliert. In diesem Fall kann die Ventileinrichtung am Auslaufende ein Mischventil sein.

Weitere Merkmale, Einzelheiten und Vorzüge der Erfindung ergeben sich aus den Ansprüchen und der Zusammenfassung, deren beider Wortlaut durch Bezugnahme zum Inhalt der Beschreibung gemacht wird, der folgenden Beschreibung bevorzugter Ausführungsformen der Erfindung sowie anhand der Zeichnung. Hierbei zeigen:
- Figur 1: einen Längsschnitt durch eine erste Ausführungsform einer von der Erfindung vorgeschlagene Sanitärarmatur;
- Figur 2: eine Stirnansicht der Sanitärarmatur von rechts in Figur 1;
- Figur 3: eine der Figur 2 entsprechende Darstellung durch eine zweite Ausführungsform einer Sanitärarmatur;
- Figur 4: eine der Figur 1 entsprechende Darstellung einer nochmals weiteren Ausführungsform einer Sanitärarmatur.

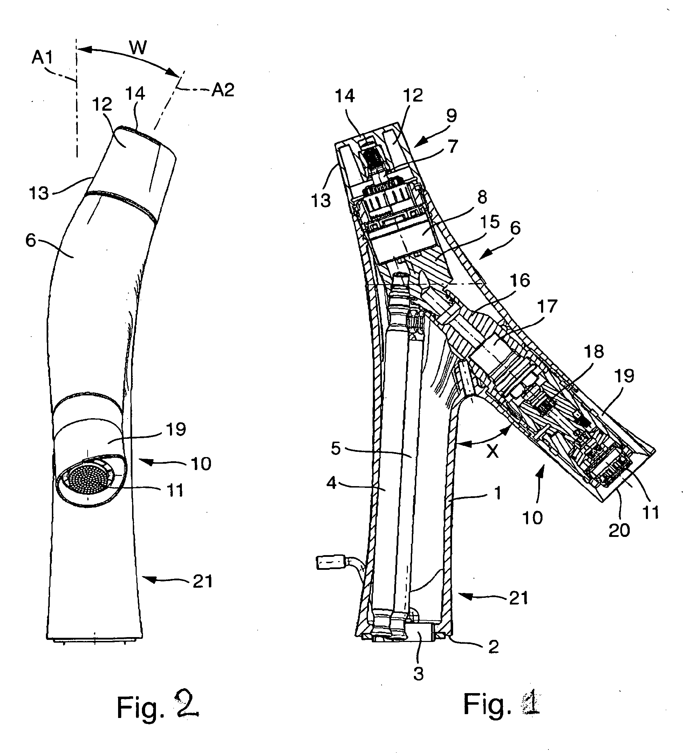

Bei der in den Figuren 1 und 2 dargestellten Sanitärarmatur handelt es sich um eine Waschbeckenarmatur, die auf der Oberseite eines Waschbeckens oder eines Waschtischs montiert wird. Zur Befestigung der Sanitärarmatur dient ein Befestigungsansatz 1, der rohrförmig ausgebildet ist. Seine untere Stirnfläche 2 stellt ein Befestigungsende dar. Mit dieser Stirnfläche 2 wird der auf einer horizontalen Fläche aufgesetzt und dort befestigt, und zwar mithilfe einer Hülse 3, die durch ein Loch des Waschbeckens hindurchgesteckt und von der Unterseite mit einem Schraubring verspannt wird. Durch diese Hülse 3 hindurch führen Zuleitungen 4, 5 für warmes und kaltes Wasser.

Der Befestigungsansatz 1 geht in einen Auslaufkörper 6 über, der ebenfalls rohrförmig ausgebildet ist. Der leicht gebogen verlaufende Auslaufkörper 6 weist an seinem in Figur 1 oberen Ende ein Betätigungselement 7 für eine Mischerkartusche 8 auf. Dieses obere Ende 9 ist das dem Befestigungsende des Befestigungsansatzes 1 entgegengesetzte Ende. Es ist gleichzeitig ein Ende des rohrförmigen Auslaufkörpers 6. An dem dem Betätigungsende 9 abgewandten Ende des Auslaufkörpers 6 ist ein Auslaufende 10 gebildet.

In dem Auslaufende 10 des Auslaufkörpers 6 ist stirnseitig ein Auslauf 11 gebildet. Dieser Auslauf 11 kann in gewissem Ausmaß verschwenkt werden, so dass dadurch der Abstrahlwinkel des Auslaufs 11 geändert werden kann.

Aus der Mischerkartusche 8 ragt das Betätigungselement 7 heraus, und zwar aus der Stirnseite des Betätigungsendes 9 des Auslaufkörpers 6. Auf das Betätigungselement 7, das als Drehschaft ausgebildet ist, ist ein Griff in Form einer Kappe 12 aufgesetzt, deren Außenseite 13 bündig in die Außenseite des Auslaufkörpers 6 übergeht. Der stirnseitige Abschluss der Kappe 12 ist eine ebene Abschlussfläche 14.

Die Mischerkartusche 8 ist in einer Aufnahme aufgenommen, deren Boden 15 mehrere Kanäle aufweist. Die beiden Zuleitungen 4, 5 münden in diesen Boden 15 und sind dort mit den entsprechenden Kanälen verbunden. Aufgrund des nur geringen Abweichens von der Achse des Befestigungsansatzes von dem Betätigungsende 9 des Auslaufkörpers 6 brauchen die Zuleitungen nicht oder nur sehr wenig gebogen zu werden.

Aus dem Boden 15 führt ein Kanal in eine weitere Aufnahme 16 für ein Absperrventil 17 ebenfalls in Form einer Kartusche. Die Kartusche enthält ein Betätigungselement 18, das mithilfe einer Hülse 19 verdreht werden kann. Die Hülse 19 bildet das Betätigungselement für die Kartusche 17. Die Hülse 19 weist eine freie Stirnkante 20 auf, die weiterreicht als der Auslauf 11. Dadurch ist der Auslauf 11 aus der Sanitärarmatur in dem Auslaufende gegenüber der Hülse 19 vertieft angeordnet. Die Hülse 19 kann an einer Stelle kürzer ausgebildet sein, siehe Figur 2.

Sowohl der Befestigungsansatz 1 als auch der Auslaufkörper 6 sind leicht gekrümmt ausgebildet. Dadurch liegen Längsmittelachsen des Betätigungsendes 9 und des Auslaufendes 10 nicht in gegenseitiger Verlängerung, sondern weichen voneinander um einen Winkel W im Bereich von etwa 15° bis etwa 20° ab. Das gleiche gilt auch für die Längsachsen des Betätigungsendes 9 und des die Stirnfläche 2 aufweisenden Befestigungsendes 21 des Befestigungsansatzes 1.

Der Befestigungsansatz 1 und das Auslaufende 10 des Auslaufkörpers 6 schließen einen Winkel X von etwa 30° bis etwa 45° miteinander ein. Daher kann man bei der in den Figuren 1 und 2 dargestellten Ausführungsform sagen, dass das Betätigungsende 9 sowohl dem Befestigungsende 21 als auch dem Auslaufende 10 entgegengesetzt angeordnet ist. Es wird eine organische schlanke Form der Sanitärarmatur geschaffen.

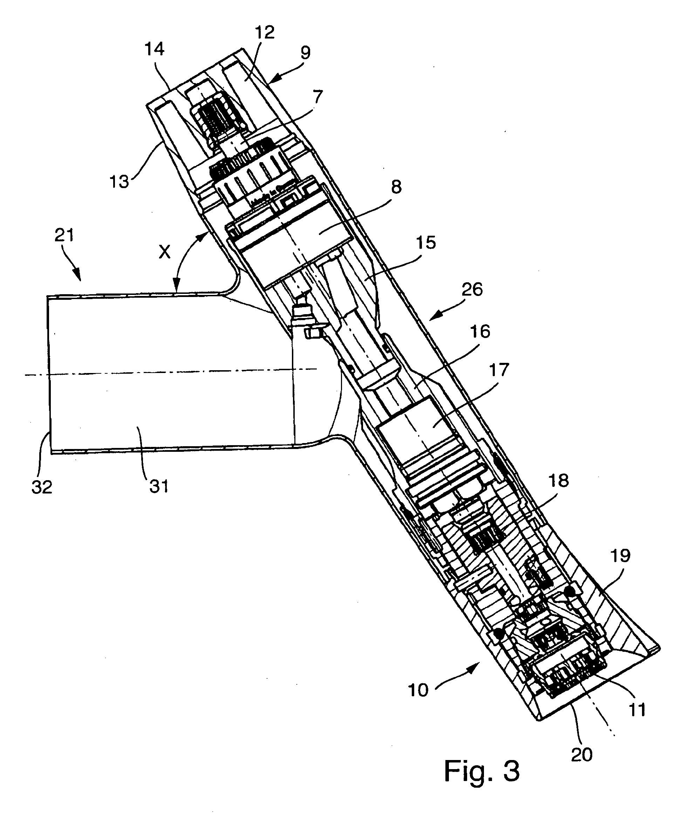

Die in Figur 3 dargestellte, zweite Ausführungsform der Sanitärarmatur ist zur Befestigung an einer senkrecht verlaufenden Wand bestimmt. Der Auslaufkörper 26 verläuft diesmal gerade, ist aber im übrigen genauso aufgebaut wie der Auslaufkörper 6 bei der Ausführungsform der Figuren 1 und 2. Während bei der Ausführungsform nach den Figuren 1 und 2 der Befestigungsansatz 1 einen spitzen Winkel mit dem Auslaufende 10 einschließt, schließt hier der Befestigungsansatz 31 einen etwa gleich großen spitzen Winkel X mit dem Betätigungsende 9 des Auslaufkörpers 26 ein, und dementsprechend ist die Stirnfläche 32 des Befestigungsansatzes 31 in montiertem Zustand vertikal orientiert. Die Zuleitungen, die nicht dargestellt sind, führen durch den hohlen Befestigungsansatz 31 und sind dann mit entsprechenden Adaptern mit den Kanälen des Bodens 15 der Aufnahme für die Mischerkartusche 8 verbunden.

Auch bei dieser Ausführungsform wird eine schlanke Sanitärarmatur geschaffen, die keine störenden Vorsprünge aufweist und bei der der Durchmesser des rohrförmigen Auslaufkörpers 26 gerade so groß zu sein braucht, dass die beiden Kartuschen 8, 17 in ihm untergebracht werden können.

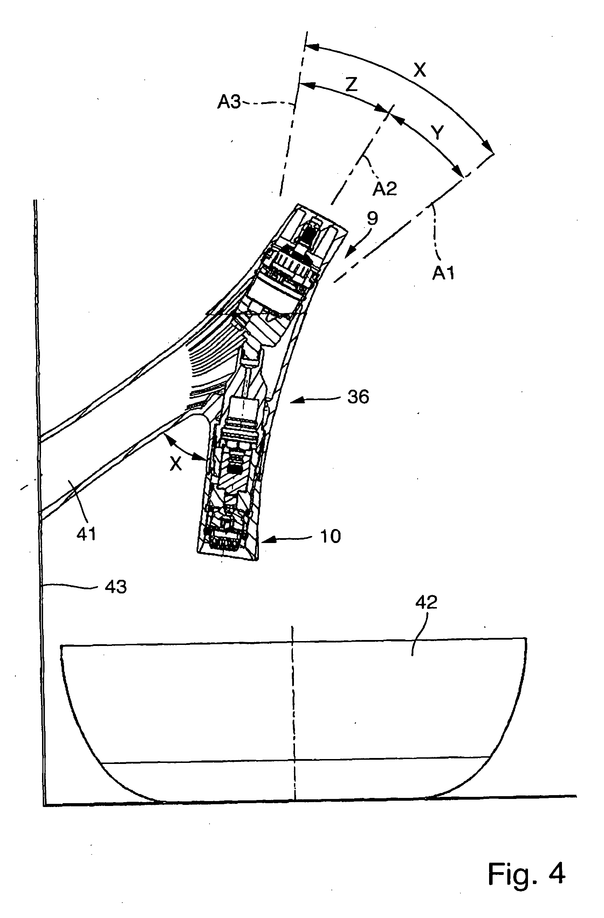

Die Figur 4 zeigt eine weitere Ausführungsform, bei der sowohl der Auslaufkörper 36 als auch der Befestigungsansatz 41 ähnlich aufgebaut sind wie bei der Ausführungsform nach den Figuren 1 und 2. Jedoch ist der Befestigungsansatz 41 an seinem Befestigungsende schräg abgeschnitten, so dass sich diese Ausführungsform zur Anbringung an einer senkrecht verlaufenden Wand 43 eignet. Der Winkel X zwischen dem Befestigungsansatz 41 und dem Auslaufkörper 36 hat etwa den gleichen Wert wie bei der Ausführungsform nach den Figuren 1 und 2. Da der innere Aufbau sowohl des Auslaufkörpers 36 als auch der darin enthaltenen Ventileinrichtungen und ihrer Betätigungselemente sich gegenüber der Ausführungsform nach den Figuren 1 und 2 nicht geändert hat, wird eine Beschreibung nicht wiederholt.

Auch bei der Ausführungsform nach Figur 4 liegt der Auslaufkörper 36 in einer vertikalen Ebene, oder anders ausgedrückt, seine Mittelachse liegt in einer vertikalen Ebene. Er kann gegenüber dieser vertikalen Ebene auch geringfügig abweichen. Der Auslauf selbst ist nach unten in das Waschbecken 42 gerichtet.

Bei der Ausführungsform nach den Figuren 1 und 2 und bei der Ausführungsform nach Figur 4 ist die Krümmung des Auslaufkörpers so gewählt, dass die konkave Seite zum Benutzer zeigt. Dagegen ist die Krümmung des Befestigungsansatzes so, dass die konkave Seite vom Benutzer weg zeigt.

Die Krümmung kann auch umgekehrt sein, also die konkave Seite des Auslaufkörpers in Richtung zur Wand und die konkave Seite des Befestigungsansatzes in Richtung zum Benutzer. Beliebige Kombinationen dieser Krümmungsarten bei entsprechenden Ausführungsformen liegen im Rahmen der Erfindung.

Anhand der Darstellung der Figur 4 werden die Winkel zwischen den einzelnen Achsen erläutert, wobei diese Erläuterung auch für die Ausführungsform nach den Figuren 1 und 2 gilt. Die Achse des Befestigungsendes des Befestigungsansatzes ist mit A1 bezeichnet. Die Achse des Auslaufendes 10 des Auslaufkörpers 36 ist mit A3 bezeichnet. Die Achse des Betätigungsendes 9 des Auslaufkörpers 36 ist mit A2 bezeichnet.

Im dargestellten Beispiel ist der Einfachheit halber angenommen, dass alle Achsen in einer Ebene liegen, in diesem Fall einer senkrechten Ebene.

Der Winkel Z zwischen der Achse A2 des Betätigungsendes des Auslaufkörpers 36 und der Achse A3 des Auslaufendes 10 des Auslaufkörpers 36 liegt im dargestellten Beispiel bei etwa 15°. Er kann einen maximalen Wert von 45° annehmen, jedoch ist die dargestellte Größe eine bevorzugte Größe.

Der Winkel Y zwischen der Achse A2 des Betätigungsendes des Auslaufkörpers 36 und der Achse A1 des Befestigungsendes des Befestigungsansatzes 41 liegt bei der dargestellten Ausführungsform ebenfalls im Bereich von 15°. Auch er kann einen größeren Wert annehmen.

Dadurch ergibt sich, dass der Winkel X zwischen der Achse A1 des Befestigungsendes und der Achse A3 des Auslaufendes 10 spitz ist, im dargestellten Beispiel etwa 30°.

Es wurde der Einfachheit halber bei der Erklärung der Ausführungsform der Figur 4 angenommen, dass die genannten Achsen in einer Ebene liegen. Es kann aber auch Abweichungen von dieser Ebene geben. Hierzu wird nochmals auf die Figur 2 verwiesen. Dort ist die Achse A1 des Befestigungsendes des Standrohrs eingezeichnet, und ebenso die Achse A2 des Betätigungsendes des Auslaufkörpers 6. In dieser Frontalansicht weichen die beiden Achsen ebenfalls um einen Winkel von etwa 15° ab. Die Abweichung dieser beiden Achsen in der Frontalansicht kann aber ebenfalls größer seien, bis knapp 90°.

## Patentansprüche

1. Sanitärarmatur, mit
- einem rohrförmigen Auslaufkörper (6, 26), der an einem Auslaufende (10) einen Auslauf (11) aus der Sanitärarmatur und ein Betätigungselement (18) für eine erste Ventileinrichtung der Sanitärarmatur aufweist und an einem dem Auslaufende (10) entgegengesetzten Betätigungsende (9) stirnseitig ein Betätigungselement (7) für eine weitere Ventileinrichtung der Sanitärarmatur aufweist, und
- einem rohrförmigen Befestigungsansatz (1, 31) zur Befestigung der Sanitärarmatur, der an seinem dem Auslaufkörper (6, 26) abgewandten Ende ein Befestigungsende (21) aufweist, durch den Zuleitungen (4, 5) für die Sanitärarmatur führen,
**dadurch gekennzeichnet, dass**
der Auslauf (11) für die erste Ventileinrichtung stirnseitig im Auslaufkörper (6, 26) angeordnet ist, und der Befestigungsansatz (1, 31) zwischen den Enden des Auslaufkörpers (6, 26, 36) in diesen übergeht.

2. Sanitärarmatur nach Anspruch 1, bei der der Befestigungsansatz (1) als Standrohr ausgebildet ist.

3. Sanitärarmatur nach Anspruch 1 oder 2, bei der das Befestigungsende (21) an dem dem Betätigungsende (9) des Auslaufkörpers (6) entgegengesetzten Ende des Befestigungsansatzes (1) oder an dem dem Auslaufende (10) des Auslaufkörpers (26) entgegengesetzten Ende des Befestigungsansatzes (31) ausgebildet ist.

4. Sanitärarmatur nach einem der vorhergehenden Ansprüche, bei der
- der Befestigungsansatz (1, 31) und der Auslaufkörper (6, 26) einen spitzen Winkel (X) miteinander einschließen und/oder
- der Auslaufkörper (26) und/oder der Befestigungsansatz geradlinig oder gekrümmt ausgebildet ist.

5. Sanitärarmatur nach einem der vorhergehenden Ansprüche, bei der eine Längsachse des Befestigungsendes (21) von einer Längsachse des gegenüberliegenden Endes des Auslaufkörpers (6, 26) um maximal 45°, vorzugsweise um maximal 15°, abweicht.

6. Sanitärarmatur nach einem der vorhergehenden Ansprüche, bei der eine Längsachse des Betätigungsendes (9) des Auslaufkörpers (6, 26, 36) von einer Längsachse des Auslaufendes (10) des Auslaufkörpers (6, 26, 36) um maximal 45°, vorzugsweise um maximal 15°, abweicht.

7. Sanitärarmatur nach einem der vorhergehenden Ansprüche, bei der das Betätigungselement (7) an dem Betätigungsende des Auslaufkörpers (6, 26) eine verdrehbare Kappe (12) aufweist, deren Außenseite (13) als angenäherte Fortsetzung des Auslaufkörpers (6, 26) geformt ist.

8. Sanitärarmatur nach Anspruch 7, bei der die Kappe (12) eine quer zur Längsachse des Auslaufkörpers (6, 26) verlaufende ebene Endfläche (14) aufweist.

9. Sanitärarmatur nach einem der vorhergehenden Ansprüche, bei der das Betätigungselement an dem Auslaufende (10) des Auslaufkörpers (6, 26) eine verdrehbare Hülse (19) aufweist, deren Außenseite vorzugsweise als angenäherte Fortsetzung des Auslaufkörpers (6, 26) geformt ist.

10. Sanitärarmatur nach Anspruch 9, bei der die Hülse (19) den Auslauf (11) umgibt.

11. Sanitärarmatur nach einem der vorhergehenden Ansprüche, bei der die von dem Betätigungselement (7) an dem Betätigungsende (9) des Auslaufkörpers (6, 26) betätigte Ventileinrichtung eine Temperatureinstellung bewirkt.

12. Sanitärarmatur nach einem der vorhergehenden Ansprüche, bei der die von dem Betätigungselement (18) an dem Auslaufende (10) des Auslaufkörpers (6, 26) betätigte Ventileinrichtung eine Mengenregulierung bewirkt.

13. Sanitärarmatur nach einem der vorhergehenden Ansprüche, bei der die Zulaufrohre (4, 5) zwischen den beiden Ventileinrichtungen in den Auslaufkörper (6, 26, 36) münden.

14. Sanitärarmatur nach einem der vorhergehenden Ansprüche, bei der die Mittelachse des Auslaufkörpers (6, 26, 36) bei montierter Sanitärarmatur mindestens angenähert in einer vertikalen Ebene liegt.

15. Sanitärarmatur nach einem der vorhergehenden Ansprüche, bei der der Abstrahlwinkel des Auslaufs (11) veränderbar und einstellbar ist.

## Claims

1. A sanitary fitting comprising
- a tubular outlet body (6, 26) having at an outlet end (10) an outlet (11) out of the sanitary fitting and an actuating element (18) for a first valve device of the sanitary fitting, and having at a face side of an actuating end (9) opposite the outlet end (10) an actuating element (7) for a further valve device of the sanitary fitting, and
- a tubular fastening attachment (1, 31) for fastening the sanitary fitting, said tubular fastening attachment (1, 31) having a fastening end (21) at its end remote from the outlet body (6, 26), and having supply lines (4, 5) for the sanitary fitting leading through it,
**characterized in that**
- the outlet (11) for the first valve device is arranged face-sided in the outlet body (6, 26) and the fastening attachment (1, 31) merges into the outlet body (6, 26, 36) between the ends of the latter.

2. The sanitary fitting according to Claim 1, wherein the fastening attachment (1) is in the form of a stand pipe.

3. The sanitary fitting according to Claim 1 or 2, wherein the fastening end (21) is formed at that end of the fastening attachment (1) which is opposite the actuating end (9) of the outlet body (6), or is formed at that end of the fastening attachment (31) which is opposite the outlet end (10) of the outlet body (26).

4. The sanitary fitting according to one of the preceding claims, wherein
- the fastening attachment (1, 31) and the outlet body (6, 26) enclose an acute angle (X) between one another, and/or
- the outlet body (26) and/or the fastening attachment are formed in a rectilinear or curved manner.

5. The sanitary fitting according to one of the preceding claims, wherein a length axis of the fastening end (21) deviates from a legnth axis of the opposite end of the outlet body (6, 26) by at most 45°, preferably by at most 15°.

6. The sanitary fitting according to one of the preceding claims, wherein a length axis of the actuating end (9) of the outlet body (6, 26, 36) deviates from a length axis of the outlet end (10) of the outlet body (6, 26, 36) by at most 45°, preferably by at most 15°.

7. The sanitary fitting according to one of the preceding claims, wherein the actuating element (7) has a rotatable cap (12) at the actuating end of the outlet body (6, 26), the outer side (13) of said rotatable cap (12) being formed as an approximate continuation of the outlet body (6, 26).

8. The sanitary fitting according to Claim 7, wherein the cap (12) has a planar end face (14) that extends transversely to the longitudinal axis of the outlet body (6, 26).

9. The sanitary fitting according to one of the preceding claims, wherein the actuating element has a rotatable sleeve (19) at the outlet end (10) of the outlet body (6, 26), the outer side of said rotatable sleeve (19) being formed preferably as an approximate continuation of the outlet body (6, 26).

10. The sanitary fitting according to Claim 9, wherein the sleeve (19) surrounds the outlet (11).

11. The sanitary fitting according to one of the preceding claims, wherein the valve device actuated by the actuating element (7) at the actuating end (9) of the outlet body (6, 26) accomplishes a temperature setting.

12. The sanitary fitting according to one of the preceding claims, wherein the valve device actuated by the actuating element (18) at the outlet end (10) of the outlet body (6, 26) accomplishes a volume regulation.

13. The sanitary fitting according to one of the preceding claims, wherein the inlet pipes (4, 5) open into the outlet body (6, 26, 36) between the two valve devices.

14. The sanitary fitting according to one of the preceding claims, wherein the central axis of the outlet body (6, 26, 36) is located at least approximately in a vertical plane with the sanitary fitting fitted.

15. The sanitary fitting according to one of the preceding claims, wherein the spray angle of the outlet (11) is alterable and settable.

## Revendications

1. Robinet sanitaire, comprenant
- un corps de sortie de forme tubulaire (6, 26) qui présente, à une extrémité de sortie (10), une sortie (11) hors du robinet sanitaire et un élément de commande (18) pour un premier dispositif de soupape du robinet sanitaire, et à une extrémité de commande (9) opposée à l'extrémité de sortie (10), du côté frontal, un élément de commande (7) pour un dispositif de soupape supplémentaire du robinet sanitaire, et
- un raccord de fixation de forme tubulaire (1, 31) pour la fixation du robinet sanitaire, lequel présente, à son extrémité opposée au corps de sortie (6, 26), une extrémité de fixation (21), à travers lequel conduisent des conduites d'alimentation (4, 5) pour le robinet sanitaire,
**caractérisé en ce que**
la sortie (11) pour le premier dispositif de soupape est disposée du côté frontal dans le corps de sortie (6, 26), et le raccord de fixation (1, 31) se prolonge entre les extrémités du corps de sortie (6, 26, 36) dans celui-ci.

2. Robinet sanitaire selon la revendication 1, dans lequel le raccord de fixation (1) est réalisé sous forme de tube support.

3. Robinet sanitaire selon la revendication 1 ou 2, dans lequel l'extrémité de fixation (21) est réalisée à l'extrémité de du raccord de fixation (1) opposée à l'extrémité de commande (9) du corps de sortie (6) ou à l'extrémité de du raccord de fixation (31) opposée à l'extrémité de sortie (10) du corps de sortie (26).

4. Robinet sanitaire selon l'une quelconque des revendications précédentes, dans lequel
- le raccord de fixation (1, 31) et le corps de sortie (6, 26) forment ensemble un angle aigu (X) et/ou
- le corps de sortie (26) et/ou le raccord de fixation sont réalisés sous forme rectiligne ou courbe.

5. Robinet sanitaire selon l'une quelconque des revendications précédentes, dans lequel un axe longitudinal de l'extrémité de fixation (21) s'écarte d'un axe longitudinal de l'extrémité opposée du corps de sortie (6, 26) de 45° au maximum, de préférence de 15° au maximum.

6. Robinet sanitaire selon l'une quelconque des revendications précédentes, dans lequel un axe longitudinal de l'extrémité de commande (9) du corps de sortie (6, 26, 36) s'écarte d'un axe longitudinal de l'extrémité de sortie (10) du corps de sortie (6, 26, 36) de 45° au maximum, de préférence de 15° au maximum.

7. Robinet sanitaire selon l'une quelconque des revendications précédentes, dans lequel l'élément de commande (7) présente, à l'extrémité de commande du corps de sortie (6, 26), un embout rotatif (12), dont le côté extérieur (13) est formé sous forme de prolongement approximatif du corps de sortie (6, 26).

8. Robinet sanitaire selon la revendication 7, dans lequel l'embout (12) présente une surface d'extrémité plane (14) s'étendant transversalement par rapport à l'axe longitudinal du corps de sortie (6, 26).

9. Robinet sanitaire selon l'une quelconque des revendications précédentes, dans lequel l'élément de commande présente, au niveau de l'extrémité de sortie (10) du corps de sortie (6, 26), une douille rotative (19) dont le côté extérieur est de préférence formé sous forme de prolongement approximatif du corps de sortie (6, 26).

10. Robinet sanitaire selon la revendication 9, dans lequel la douille (19) entoure la sortie (11).

11. Robinet sanitaire selon l'une quelconque des revendications précédentes, dans lequel le dispositif de soupape commandé par l'élément de commande (7) au niveau de l'extrémité de commande (9) du corps de sortie (6, 26) effectue un réglage de température.

12. Robinet sanitaire selon l'une quelconque des revendications précédentes, dans lequel le dispositif de soupape commandé par l'élément de commande (18) à l'extrémité de sortie (10) du corps de sortie (6, 26) effectue une régulation de volume.

13. Robinet sanitaire selon l'une quelconque des revendications précédentes, dans lequel les tuyaux d'alimentation (4, 5) entre les deux dispositifs de soupape débouchent dans le corps de sortie (6, 26, 36).

14. Robinet sanitaire selon l'une quelconque des revendications précédentes, dans lequel l'axe médian du corps de sortie (6, 26, 36) est situé au moins approximativement dans un plan vertical lorsque le robinet sanitaire est monté.

15. Robinet sanitaire selon l'une quelconque des revendications précédentes, dans lequel l'angle de jet de la sortie (11) peut être modifié et réglé.
